(19) Europäisches Patentamt
European Patent Office
Office européen des brevets

(11) **EP 3 827 443 B1**

(12) **EUROPEAN PATENT SPECIFICATION**

(45) Date of publication and mention
of the grant of the patent:
**16.03.2022 Bulletin 2022/11**

(21) Application number: **18840092.3**

(22) Date of filing: **03.12.2018**

(51) International Patent Classification (IPC):
**G21C 3/58** *(2006.01)*     **G21C 3/62** *(2006.01)*

(52) Cooperative Patent Classification (CPC):
**G21C 3/58; G21C 3/62;** Y02E 30/00; Y02E 30/30

(86) International application number:
**PCT/SK2018/000010**

(87) International publication number:
**WO 2020/022964 (30.01.2020 Gazette 2020/05)**

(54) **ADDITION INTO THE FUEL MIXTURE OF NUCLEAR FUEL FOR NUCLEAR REACTORS**

ADDITIV FÜR KERNBRENNSTOFFMISCHUNG FÜR KERNREAKTOREN

ADDITIF POUR COMBUSTIBLE NUCLÉAIRE POUR UN RÉACTEUR NUCLÉAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2018 SK PP672018**

(43) Date of publication of application:
**02.06.2021 Bulletin 2021/22**

(73) Proprietor: **WEST REALITY, S.R.O.
040 01 Kosice (SK)**

(72) Inventor: **RAFAY, Peter
040 01 Kosice (SK)**

(74) Representative: **Majlingová, Zuzana
Majlingová & Partners, s.r.o.
Budatínska 12
851 06 Bratislava (SK)**

(56) References cited:
**WO-A1-2012/170549     DE-B- 1 263 937
GB-A- 1 077 384     US-A- 3 198 856**

## Description

### The field of science

The invention is concerned with the admixture for the mixture of nuclear fuel assigned for nuclear reactors using stable isotopes of cadmium and a stable isotope of mercury, followed by a nuclear transformation of these stable natural isotopes by neutrons generated during the fission chain reaction of the original component of the fuel mixture of nuclear uranium fuel used in a nuclear reactor.

### Previous state of science

In case of the nuclear uranium type reactors the fuel mixture of the nuclear fuel used until now consists of the uranium element, from two naturally occurring stable isotopes of uranium which is mined in sites containing uranium deposits:

$$^{235}_{92}U + {}^{238}_{92}U$$

An isotope is an element with the same proton number = the same number of protons in the nucleus of the element (in the case of uranium this number is 92 protons in the nucleus) and different number of neutrons in the nucleus (for $^{235}_{92}U$ isotope the number of neutrons in the nucleus equals to 143 and for the $^{238}_{92}U$ isotope the number of neutrons in the nucleus is the 146). The sum of protons and neutrons in the nucleus gives the number of nucleons in the nucleus (for the $^{235}_{92}U$ isotope is their number 235 and for the $^{238}_{92}U$ isotope is their number 238). Under natural conditions, uranium isotopes are present as follows: $^{235}_{92}U$ - 0,72% and $^{238}_{92}U$ - 99,274% of total natural uranium. After neutron irradiation these two isotopes will undergo two completely different types of reactions in the nuclear reactor.

1) A fission chain reaction caused by a so-called fissionable uranium isotope specifically by $^{235}_{92}U$ which will cause the fission chain reaction after the neutron irradiation under equation [1]:

Equation [1]:

$$^{235}_{92}U + {}^1_0 n \rightarrow {}^{93}_{36}Kr + {}^{140}_{56}Ba + 3{}^1_0 n + 160{,}5\ MeV$$

(kinetic energy of the reaction fragments)
This means that this isotope mixture enriched to 2.5 - 3% and sometimes up to 5%, is exposed to the influence of neutrons at the beginning of the process, which will start the fission chain reaction and cause the splitting of the nucleus of this isotope into two approximately equal-sized nuclei while two elements originate (in this case two isotopes of krypton and barium that are unstable and they decay further according to known equations and we call them radioactive waste).
In this decay 3 neutrons are generated on average and heat of 160,5 MeV is released, which will be used to heat water in the primary circuit of the nuclear reactor, through the heat exchanger it will further heat the water in the secondary circuit of the nuclear reactor and transform it into steam which rotates the turbine of the steam generator and subsequently generates electricity. From the three neutrons generated, one will be used to repeat the fission chain reaction, and that is why we call it a chain reaction, as this one neutron reacts with the fissionable isotope $^{235}_{92}U$ and it splits further and the other two neutrons have to be contained in order for the reaction to remain controlled. These two neutrons are captured by another uranium isotope (specifically by $^{238}_{92}U$ isotope that is not fissionable, causing a moderating reaction (which can also be called a multiplier or breeder reaction, as there are additional isotopes multiplied and bred in it, and new fissionable isotopes formed).

2) The moderating (multiplying or breeder) nuclear reaction is such that the remaining two neutrons originating from the fission reaction are captured by an isotope of uranium, specifically $^{238}_{92}U$, which absorbs these neutrons into its nucleus according to the reaction described in the equation [2]. It does not cause a fission chain reaction anymore, however it is changed into a new uranium isotope $^{239}_{92}U$ which is unstable and will emit an electron (beta minus radiation) and will be converted to a neptunium isotope, specifically $^{239}_{93}Np$ which is also unstable and it will emit an additional electron (beta minus radiation), which will convert to a fairly stable plutonium isotope, specifically $^{239}_{94}Pu$ , which is also fissionable and it is also used to generate electricity (as it is also a source of neutrons) and for military use, specifically for the manufacturing of a nuclear plutonium bomb. Plutonium is also very toxic and it is not for sale.

The equation [2]:

The equation [2]:

$$^{238}_{92}U + ^{1}_{0}n \rightarrow ^{239}_{92}U \rightarrow ^{239}_{93}Np + ^{0}_{-1}e \rightarrow ^{239}_{94}Pu + ^{0}_{-1}e$$

Deficiencies of the prior technique:

1) Possibility of misuse of plutonium for military purposes
2) High toxicity of the created plutonium
3) Impossibility of commercial use of plutonium
4) Insufficient evaluation of generated neutrons, which is mostly considered to be waste
5) Reduced economic efficiency of electricity generation

**The Essence of the Invention:**

The deficiencies and disadvantages mentioned above are essentially eliminated through the proposed addition into the fuel mixture of the nuclear fuel into nuclear reactors according to the invention, the essence of which is that the admixture is added into or the nuclear fuel and consists of stable cadmium isotopes of $^{106}_{48}Cd$ , $^{108}_{48}Cd$ isotopes, where transformation of these natural stable isotopes of cadmium into stable silver isotopes occurs, specifically $^{107}_{47}Ag$ , $^{109}_{47}Ag$ by neutrons resulting from the fission chain reaction of the original nuclear uranium fuel component consisting of the uranium isotope $^{235}_{92}U$ and they partially replace the creation of plutonium for military use, specifically of the $^{239}_{94}Pu$ isotope, while the created stable silver isotopes can be commercially used. **and/or**

The admixture into the fuel mixture of the nuclear fuel for nuclear reactors, consisting of a stable isotope of mercury of the stable natural $^{196}_{80}Hg$ isotope, where there is a nuclear transformation to a stable gold isotope, specifically $^{197}_{79}Au$ , by neutrons originating during the fission chain reaction of the original component of the nuclear uranium fuel from the uranium isotope $^{235}_{92}U$ and they partially replace the formation of plutonium for military use, particularly $^{239}_{94}Pu$ isotope, whereby the stable gold isotope produced can be commercially used.

At present, most neutrons are captured in the reactor control rods, where they are absorbed, alternatively a fraction f the neutrons is used to produce the plutonium isotope, $^{239}_{94}Pu$ isotope, which can be used again to produce electricity, similar to the uranium isotope $^{235}_{92}U$ , and also for the production of an atomic bomb, and this is a process undesirable in the peaceful use of nuclear power. We can say that in addition to producing the plutonium isotope, most neutrons are not used and are without economic effect, and the sale of plutonium is not possible due to possible military use.

The advantage of the invention consists in the fact that the neutrons generated during the fission nuclear reaction from the uranium isotope $^{235}_{92}U$ will be utilized more efficiently from both a technical and economic standpoint (according equation [1]).

**Proposal of the fuel mixture for use in a nuclear fission reactor:**

According to the technical features of the invention the admixture added into the fuel mixture of the uranium nuclear fuel used at present, which consists of uranium isotopes, particularly $^{235}_{92}U + ^{238}_{92}U$ , found in a naturally harvested uranium ore, with the natural occurrence of isotopes being $^{235}_{92}U - 0,72\%$ and $^{238}_{92}U - 99,274\%$ from the total natural uranium, with this ore being enriched to a higher concentration of the fissile isotope of uranium $^{235}_{92}U$ to a percentage value of 2.5% to 3%, and sometimes even to 5% of the total uranium mixture.

The advantage of the invention is that the neutrons generated during the fission nuclear reaction from the uranium isotope $^{235}_{92}U$ (under the equation [1]) are better utilized technically and economically. We are working with the assumption of known processes of the transformation of the nuclei of various isotopes of elements.

It is mainly about the use of this effect, which consists in the fact that the various elements are found on the surface of Earth in different concentrations and therefore have a different unit price. This price is also different due to the fact that each element in the industry has different uses, and therefore to have it available in a certain amount we can use the conversion of cheaper and less valuable elements into other more expensive and rare ones. These conversion processes are known. Here the possibility of usage is caused by the fact that neutron sources generated during the production of electricity in a nuclear reactor are not being used sufficiently (except for the production of fissionable $^{239}_{94}Pu$ for military use).

The invention offers a new composition of the mixture of nuclear fuel:
The current mixture of nuclear fuel + admixture consisting of:

- Two natural cadmium isotopes, specifically: $^{106}_{48}Cd$ and $^{108}_{48}Cd$ that are converted after the addition of one neutron into unstable cadmium isotopes: $^{107}_{48}Cd$ and $^{109}_{48}Cd$ . These two unstable isotopes are changed in a nuclear transformation after an electron gets emitted (beta minus radiations) into two stable isotopes of silver $^{107}_{47}Ag$ and $^{109}_{47}Ag$ under the equation [3]:

The Equation [3]:

$$^{106}_{48}Cd + ^{1}_{0}n \rightarrow ^{107}_{48}Cd$$

$$^{108}_{48}Cd + +^{1}_{0}n \rightarrow ^{109}_{48}Cd$$

$$^{107}_{48}Cd \rightarrow ^{107}_{47}Ag + ^{0}_{-1}e \text{ with a half-life of 6.5 hours}$$

$$^{109}_{48}Cd \rightarrow ^{109}_{47}Ag + ^{0}_{-1}e \text{ with a half-life of 461 days}$$

- From a stable natural mercury isotope, specifically $^{196}_{80}Hg$ , which gets converted after the addition of one neutron into an unstable mercury isotope $^{197}_{80}Hg$ , which then gets converted in a nuclear transformation after the irradiation of an electron (beta minus radiation) into a stable gold isotope $^{197}_{79}Au$ . These reactions are carried out according to the equation [4]:

The Equation [4]:

$$^{196}_{80}Hg + ^{1}_{0}n \rightarrow ^{197}_{80}Hg$$

$$^{197}_{80}Hg \rightarrow ^{197}_{79}Au + \beta^{-}$$

**Description of minimum one example of a practical implication of the invention:**

**Example No. 1:**

Cadmium isotopes are added to the currently used mixture of the uranium nuclear fuel used in nuclear reactors, specifically $^{106}_{48}Cd$ and $^{108}_{48}Cd$, which are converted to two unstable cadmium isotopes $^{107}_{48}Cd$ and $^{109}_{48}Cd$ after the addition of two neutrons which are generated as a surplus during the fission reaction under the equation [1]. These two unstable cadmium isotopes are transformed into two stable silver isotopes $^{107}_{47}Ag$ and $^{109}_{47}Ag$ during the nuclear transformation, after electron irradiation (beta minus radiation) as described by the equation [3]:

The Equation [3]:

$$^{106}_{48}Cd + ^{1}_{0}n \rightarrow ^{107}_{48}Cd$$

$$^{108}_{48}Cd + +^{1}_{0}n \rightarrow ^{109}_{48}Cd$$

$$^{107}_{48}Cd \rightarrow ^{107}_{47}Ag + ^{0}_{-1}e \text{ with a half-life of 6.5 hours}$$

$$^{109}_{48}Cd \rightarrow ^{109}_{47}Ag + ^{0}_{-1}e \text{ with a half-life of 461 days}$$

Thus, the stable isotopes of silver, that are economically more valuable than the original cadmium isotopes, are generated in the nuclear reactor.

**Example No. 2:**

Similarly to the currently used mixture of nuclear uranium fuel for nuclear reactors a mercury isotope is added, specifically $^{196}_{80}Hg$, which is converted into an unstable mercury isotope $^{197}_{80}Hg$ after the addition of one neutron, and during the nuclear transformation this unstable mercury isotope will be transformed into an stable gold isotope $^{197}_{79}Au$, after an electron has been emitted (beta minus radiation). These reactions are carried out according to equation [4]:

The Equation [4]:

$$^{196}_{80}Hg + ^{1}_{0}n \rightarrow ^{197}_{80}Hg$$

$$^{197}_{80}Hg \rightarrow ^{197}_{79}Au + \beta^{-}$$

This way a stable gold isotope is generated in the nuclear reactor, and it is economically more valuable than the original mercury isotope.

**Applicability in the industry**

Practically, this invention can be used in all active atomic reactors, the installed performance of which represents an equivalent of 370 units of 1 GW reactors. By this invention it would be possible to produce an additional 1480t of gold annually, which is only by the annual mining of natural mercury in amount of 3600 tons, from which 5 tonnes of $^{196}_{80}Hg$ isotope can be obtained. From this isotope, through the action of neutrons, it is able to produce approximately the same amount of the stable gold isotope $^{197}_{79}Au$. The generated neutrons can also be used to produce other valuable isotopes according to the respective equations, the example of such production is the production of silver from cadmium.

**Claims**

1. An uranium nuclear fuel mixture **characterized in that** it comprises an admixture consisting of cadmium isotopes $^{106}_{48}Cd$ and $^{108}_{48}Cd$ and/or of stable mercury isotopes, specifically of mercury isotope $^{196}_{80}Hg$ .

2. Use of cadmium isotopes $^{106}_{48}Cd$ and $^{108}_{48}Cd$ as an admixture to a uranium nuclear fuel mixture in nuclear reactors to obtain silver isotopes $^{107}_{47}Ag$ and $^{109}_{47}Ag$ .

3. Use of stable mercury isotopes, specifically of mercury isotope $^{196}_{80}Hg$ as an admixture to a uranium nuclear fuel mixture in nuclear reactors to obtain gold isotope $^{197}_{79}Au$ .

4. Use according to claims 2 or 3 in nuclear reactors having a power of 1GW.


**Patentansprüche**

1. Uran-Kernbrennstoffgemisch, **dadurch gekennzeichnet, dass** es eine aus Cadmiumisotopen $^{106}_{48}Cd$ und $^{108}_{48}Cd$ und/oder aus stabilen Quecksilberisotopen, insbesondere aus Quecksilberisotop $^{196}_{80}Hg$ , bestehende Beimischung enthält.

2. Verwendung von Cadmiumisotopen $^{106}_{48}Cd$ und $^{108}_{48}Cd$ wie einer Beimischung ins Uran-Kernbrennstoffgemisch in Kernreaktoren zur Gewinnung von Silberisotopen $^{107}_{47}Ag$ und $^{109}_{47}Ag$ .

3. Verwendung stabiler Quecksilberisotope, insbesondere des Quecksilberisotops $^{196}_{80}Hg$ wie einer Beimischung ins Uran-Kernbrennstoffgemisch in Kernreaktoren zur Gewinnung von Goldisotop $^{197}_{79}Au$ .

4. Verwendung nach den Ansprüchen 2 oder 3 in Kernreaktoren mit einer Leistung von 1GW.


**Revendications**

1. Mélange de combustible nucléaire d'uranium **caractérisé en ce qu'**il comprend un adjuvant consistant en isotopes de cadmium $^{106}_{48}Cd$ et $^{108}_{48}Cd$ et et/ou isotopes de mercure stables, à savoir isotope de mercure $^{196}_{80}Hg$ . .

2. Utilisation des isotopes de cadmium $^{106}_{48}Cd$ et $^{108}_{48}Cd$ comme adjuvant pour un mélange de combustible nucléaire d'uranium dans les réacteurs nucléaires afin d'obtenir des isotopes d'argent $^{107}_{47}Ag$ et $^{109}_{47}Ag$ . .

3. Utilisation des isotopes stables de mercure, à savoir isotope de mercure $^{196}_{80}Hg$ , comme adjuvant pour un mélange de combustible nucléaire d'uranium dans les réacteurs nucléaires afin d'obtenir des isotopes d'or $^{197}_{79}Au$ . .

4. Utilisation suivant les revendications 2 ou 3 dans les réacteurs nucléaires avec une puissance de 1 GW.